# EUROPÄISCHE PATENTSCHRIFT

(11) **EP 3 959 110 B1**
(45) Veröffentlichungstag und Bekanntmachung des Hinweises auf die Patenterteilung: **08.10.2025**
(21) Anmeldenummer: 20706402.3
(22) Anmeldetag: 10.02.2020
(51) Int. Cl.: B60T 8/36

(54) **HYDRAULIKAGGREGAT, INSBESONDERE ZUR STEUERUNG DES BREMSDRUCKS EINER RADBREMSE EINER ELEKTRONISCH SCHLUPFREGELBAREN BREMSANLAGE EINES KRAFTFAHRZEUGS**
HYDRAULICS ASSEMBLY, IN PARTICULAR FOR CONTROLLING THE BRAKE PRESSURE OF A WHEEL BRAKE OF AN ELECTRONICALLY SLIP-CONTROLLABLE BRAKE SYSTEM OF A MOTOR VEHICLE
UNITÉ HYDRAULIQUE, NOTAMMENT POUR COMMANDER LA PRESSION DE FREINAGE D'UN FREIN DE ROUE D'UN SYSTÈME DE FREINAGE À RÉGULATION ANTIPATINAGE ÉLECTRONIQUE D'UN VÉHICULE AUTOMOBILE

(30) Priorität: 23.04.2019 DE 102019205803
(43) Veröffentlichungstag der Anmeldung: 02.03.2022
(73) Patentinhaber: Robert Bosch GmbH, 70442 Stuttgart (DE)
(72) Erfinder: BREGEAULT, Julien, 71636 Ludwigsburg (DE); KLOSS, Michael, 74360 Ilsfeld-Auenstein (DE); KAMEYAMA, Hiroshi, Yokohama-Shi Kanagawa Bosch Corporation, 224--- 8501 (JP)
(86) Internationale Anmeldenummer: PCT/EP2020/053249
(87) Internationale Veröffentlichungsnummer: WO 2020/216485

(56) Entgegenhaltungen:
- EP-A2- 1 388 476
- WO-A1-03/064229

## Beschreibung

### Technischer Hintergrund

Elektronisch schlupfregelbare Bremsanlagen weisen als wesentliche Komponente ein Hydraulikaggregat auf, das den Bremsdruck der Radbremsen an die Schlupfverhältnisse anpasst, die am jeweils zugeordneten Rad augenblicklich vorherrschen. Die dabei eingesetzten Bremsflüssigkeiten können abhängig von der Temperatur und dem Druck eine gewisse Menge an Gas lösen. Wird diese Bremsflüssigkeit dann einer isobaren Erwärmung, beispielsweise durch Eigenerwärmung, Sonneneinstrahlung oder Motorwärme und/oder einer isothermen Drucksenkung, wie zum Beispiel bei einem regulären Bremsdruckabbau oder einer eventuell auftretenden Kavitation, ausgesetzt, kann das gelöste Gas wieder aus der Bremsflüssigkeit austreten und zur Ansammlung von Gasblasen in den Bremskreisen führen. Dieses Verhalten wird von verschieden Parametern beeinflusst, wie beispielsweise dem Wassergehalt bzw. dem Alterungszustand der Bremsflüssigkeit, der Temperatur, dem Druck, der Art der Bremsflüssigkeit und den Betriebszuständen des Bremssystems. Eine gezielte Auslegung oder Verhaltensvorhersage einer Bremsanlage ist aufgrund dieser Eigenschaft der Bremsflüssigkeit über Lebenszeit nur schwer durchführbar. Ebenso existieren bislang keine technischen Lösungen um Bremsflüssigkeiten dauerhaft in einem definierten Zustand zu halten.

Gasblasen in den Bremskreisen beeinflussen die Funktionseigenschaften eines Bremssystems, beispielsweise in dem sie Druckpulsationen auf der Saug- oder der Druckseite eines den Bremsdruck erzeugenden Druckerzeugers dämpfen, aber auch Vibrationen des Hydraulikaggregats verstärken oder unerwünschte Betriebsgeräusche an den Ventilen des Hydraulikaggregats zur Bremsdruckregelung hervorrufen können.

Um dennoch Marktanforderungen hinsichtlich Funktionseigenschaften, Geräusch und Verhalten einer Bremsanlage über Lebensdauer zu erfüllen werden in aktuellen Bremssystemen Bauelemente eingebaut, welche die oben erläuterten nachteiligen Auswirkungen reduzieren. Es handelt sich dabei zum Beispiel um flexible Bremsleitungen, elastische Halterungen zur Befestigung eines Hydraulikaggregats einer elektronisch schlupfregelbaren Bremsanlage an einer Fahrzeugkarosserie oder um am Hydraulikaggregat verbaute Pulsationsdämpfungseinrichtungen.

Derartige Einrichtungen nehmen Bauraum in Anspruch, verursachen Teile- und Montagekosten, erschweren Vorhersagen über das Betriebsverhalten einer Bremsanlage während der Lebenszeit und gestalten letztlich die Auslegung einer Bremsanlage aufwendiger.

### Stand der Technik

Die vorliegende Erfindung ist auf ein Hydraulikaggregat gerichtet, wie es beispielsweise aus der Europäischen Patentanmeldung EP 1 388 476 A2 bereits bekannt ist. Dieses bekannte Hydraulikaggregat ist nach den Merkmalen des Oberbegriffs des Anspruchs 1 ausgebildet und umfasst dementsprechend einen Hydraulikblock mit einer Ausnehmung zur Aufnahme eines Pumpenelements, einen Leitungsanschluss zur Kontaktierung des Hydraulikaggregats mit einer Radbremse, eine Speicherkammer zur Versorgung des Pumpenelements mit Bremsflüssigkeit sowie einen Kanal welcher die Speicherkammer mit der Aufnahme für das Pumpenelement in einem Bereich einer Saugseite des in die Ausnehmung eingesetzten Pumpenelements kontaktiert.

Ein dementsprechendes Hydraulikaggregat ist darüber hinaus auch in der WO 03/064229 A1 offenbart.

### Vorteile der Erfindung

Die Erfindung unterscheidet sich von diesem Stand der Technik dadurch, dass eine im Inneren des Hydraulikblocks ausgebildete und mit der Ausnehmung im Bereich der Saugseite des in die Ausnehmung eingesetzten Pumpenelements kontaktierte hydraulische Kavität vorgesehen ist,
dass diese hydraulische Kavität eine Steigleitung umfasst, die eine im Inneren des Hydraulikblocks endende Sacklochbohrung ausbildet und
dass die Steigleitung von der Ausnehmung für das Pumpenelement in Richtung zum Leitungsanschluss hin verläuft.

Anhand dieser Merkmale werden die Aufgaben gelöst, dass sich im Bremssystem auftretende Gasblasen aufgrund des wirksamen gravimetrischen Auftriebs quasi selbsttätig in dieser Kavität sammeln können und dass folglich durch das Pumpenelement generierte Betriebsgeräusche und Druckpulsationen auf der Saugseite dieses Pumpenelements wirksam reduziert werden. Die vorgeschlagenen Maßnahmen sind bauraumneutral am Hydraulikblock des Hydraulikaggregats umsetzbar und verursachen keine Kosten für zusätzliche Bauteile und deren Montage. Sie lassen sich bei der Herstellung des Hydraulikblocks bauraumneutral realisieren und sind darüber hinaus mit bekannten Dämpfungseinrichtungen kombinierbar bzw. machen derartige zusätzliche Dämpfungseinrichtungen evtl. sogar entbehrlich. Schließlich zeichnet sich die Erfindung dadurch aus, dass sie keinem alterungsbedingten Verschleiß unterliegt und über die Lebensdauer eines Hydraulikaggregats unverändert wirksam ist. Durch die Erfindung ist das Betriebscharakteristik des Hydraulikaggregats über die Lebensdauer vergleichmäßigt und insgesamt präziser abschätzbar, was wiederum die Auslegung eines Bremssystems vereinfacht.

Weitere Vorteile oder vorteilhafte Weiterbildungen der Erfindung ergeben sich aus den Unteransprüchen oder aus der nachfolgenden Beschreibung.

### Zeichnung

Verschiedene Ausführungsbeispiele der Erfindung sind in der Zeichnung dargestellt und werden in der nachfolgenden Beschreibung detailliert erläutert.

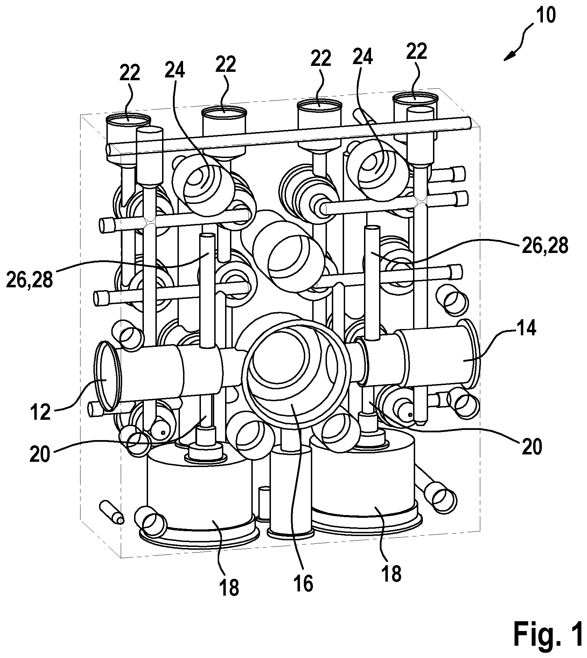

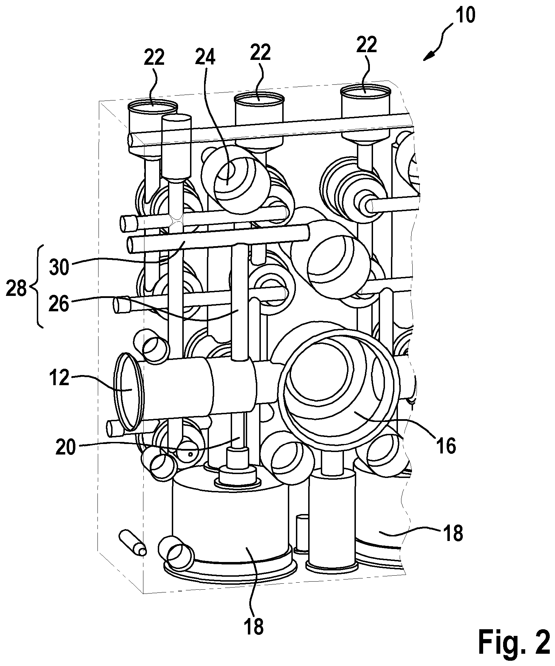

Die Figuren 1 bis 8 zeigen, jeweils in dreidimensionaler Darstellung, ein Bohrbild eines erfindungsgemäß ausgebildeten Hydraulikblocks eines Hydraulikaggregats einer elektronisch schlupfregelbaren Fahrzeugbremsanlage. Die Figuren 1, 5, 6 und 8 zeigen in diesem Zusammenhang den gesamten Hydraulikblock mit zwei Bremskreisen, während in den Figuren 2 bis 7 und 7 lediglich eine Hälfte des Hydraulikblocks und damit lediglich einer der Bremskreise zu sehen ist. Einander entsprechende Bauelemente sind in den Figuren mit einheitlichen Bezugszeichen versehen.

### Beschreibung der Ausführungsbeispiele

Der Hydraulikblock 10 nach Figur 1 wird vielfach auch als Pumpengehäuse eines Hydraulikaggregats bezeichnet. Er ist quaderförmig ausgebildet und weist dementsprechend pro Raumachse jeweils zwei einander planparallel gegenüberliegende Außenseiten auf. An diesen Außenseiten des Hydraulikblocks 10 sind eine Vielzahl unterschiedlich von außen nach innen abgestufter bzw. unterschiedlich dimensionierter Ausnehmungen ausgebildet. Jede dieser Ausnehmungen ist zu einer der Außenseiten hin offen und endet sacklochartig im Inneren des Hydraulikblocks 10. Die Ausnehmungen dienen beispielsweise zur Aufnahme von mit Kolben bestückten Pumpenelementen zur Bremsdruckerzeugung, Antriebselementen zur Betätigung dieser Pumpenkolben, Ventilen zur Regelung des von den Pumpenelementen erzeugten Bremsdrucks, Druckmittelspeichern zur Pufferung von Bremsflüssigkeit, die im Rahmen eines Bremsdruckabbaus aus den Radbremsen abgelassen wird oder Dämpfungseinrichtungen zur Dämpfung von Pulsationen der Bremsflüssigkeit. Diese hydraulischen Komponenten werden dazu von außen in die Ausnehmungen eingesetzt und darin befestigt oder gelagert. Darüber hinaus sind Hydraulikanschlüsse am Hydraulikblock 10 vorhanden über die dieser Hydraulikblock 10 mittels extern geführten Bremsleitungen mit einem Hauptbremszylinder und/oder mit den Radbremsen eines Bremssystems kontaktierbar ist. Die erläuterten Ausnehmungen und Anschlüsse sind nach der Maßgabe eines an sich bekannten Hydraulikschaltplans einer elektronisch schlupfregelbaren Fahrzeugbremsanlage über Druckmittelkanäle untereinander verbunden. Aus bauraum- und/oder fertigungstechnischen Gründen sind die Ausnehmungen und Druckmittelkanäle vorzugsweise orthogonal zueinander am Hydraulikblock 10 angeordnet.

In der Figur 1 sind zwei horizontal ausgerichtete Ausnehmungen 12, 14 zu erkennen, die sich ausgehend von der linken und von der rechten Außenseite in das Innere des Hydraulikblocks 10 hinein erstrecken und deren innen liegende Enden in eine zur Vorderseite des Hydraulikblocks 10 hin offene dritte Ausnehmung 16 münden. Die beiden horizontalen Ausnehmungen 12, 14 sind vorgesehen um jeweils ein Pumpenelement aufzunehmen. Die dritte Ausnehmung 16 ist dazu bestimmt ein rotierend antreibbares Exzenterelement unterzubringen, welches die von gegenüberliegenden Seiten in die dritte Ausnehmung 16 abschnittsweise hineinragenden Kolben der beiden Pumpenelemente mechanisch zu einer hin- und hergehenden Hubbewegung antreibt.

Weiterhin sind am gezeigten Hydraulikblock 10 unterhalb der beiden Ausnehmungen für die Pumpenelemente zwei Speicherkammern 18 vorhanden. Diese Speicherkammern 18 erstrecken sich von der Unterseite her in den Hydraulikblock 10 hinein und nehmen im Falle einer stattfindenden Bremsdruckabsenkung aus den Radbremsen abgelassenes Druckmittel auf. Die Speicherkammern 18 sind jeweils über einen Vertikalkanal 20 hydraulisch an jeweils eine der Ausnehmungen 12; 14 für die Pumpenelemente angebunden. Der Vertikalkanal 20 verbindet dabei die Speicherkammer 18 mit einer Saugseite eines in die zugeordnete Ausnehmung 12; 14 eingesetzten Pumpenelements und gewährleistet somit die Versorgung dieses Pumpenelements mit Bremsflüssigkeit.

Zudem sind am Hydraulikblock 10 Leitungsanschlüsse 22 und 24 ausgebildet. Vier Leitungsanschlüsse 22 sind in einer Reihe nebeneinander an der Oberseite des Hydraulikblocks 10 angeordnet. Diese vier Leitungsanschlüsse 22 sind vorgesehen um den Hydraulikblock 10 über externe Leitungen mit den Radbremsen einer Fahrzeugbremsanlage zu verbinden. Zwei weitere Leitungsanschlüsse 24 befinden sich im Bereich der Oberseite an der Vorderseite des Hydraulikblocks 10. Diese beiden Leitungsanschlüsse 24 kontaktieren den Hydraulikblock 10 über Leitungen mit den beiden Bremskreisen eines Hauptbremszylinders.

Es ist davon auszugehen, dass das fertig montierte Hydraulikaggregat in seinem eingebauten Zustand derart an einer Fahrzeugkarosserie angeordnet ist, dass die Leitungsanschlüsse 22, 24 aus Gründen ihrer Zugänglichkeit zur mechanischen Kontaktierung des Hydraulikaggregats mit den erläuterten externen Komponenten, nach oben ausgerichtet sind, sich also an oder im Bereich einer Oberseite des eingebauten Hydraulikaggregats befinden. Die Figur 1 zeigt den Hydraulikblock 10 dementsprechend in seiner Einbaulage.

Erkennbar verläuft der Vertikalkanal 20 orthogonal zur Ausnehmung 12, 14 des Pumpenelements und mündet, wie erwähnt, im Bereich der Saugseite eines Pumpenelements in diese Ausnehmung 12, 14 ein. Dieser Bereich um die Einmündungsstelle entspricht innerhalb eines Bremskreises dem Bereich geringsten Druckes. Dies kann, wie oben dargelegt, dazu führen, dass bislang gelöstes Gas in diesem Bereich aus der Bremsflüssigkeit austritt und sich zu Gasblasen ansammelt. Um nun zu verhindern, dass einmal aufgetretene Gasblasen vom Pumpenelement angesaugt und weiter zur Pumpendruckseite transportiert werden, ist der Vertikalkanal 20 auf seiner der Einmündungsstelle in die Pumpenaufnahme gegenüberliegenden Seite verlängert bzw. weitergeführt. Der sich über die Ausnehmungen 12, 14 für die Pumpenelemente erstreckende Abschnitt des Vertikalkanals 20 bildet eine Steigleitung 26 aus, welche sich, vorzugsweise in vertikaler Raumrichtung, zu den am Hydraulikblock 10 ausgebildeten Leitungsanschlüssen 22, 24 hin erstreckt. Die Steigleitung 26 endet sacklochartig im Inneren des Hydraulikblocks 10 auf einer unterhalb der Leitungsanschlüsse 24 für den Hauptbremszylinder liegenden Höhe.

Evtl. auftretende Gasblasen auf der Saugseite eines Pumpenelements treten aufgrund des wirksamen gravimetrischen Auftriebs in die Steigleitung 26 ein und steigen innerhalb dieser Steigleitung 26 zu deren geschlossenem Ende hin auf. Dort sammeln sich die Gasblasen an. Der Bereich aus dem das angetriebene Pumpenelement Bremsflüssigkeit ansaugt, ist dadurch weitgehend frei von Gasblasen und es wird somit vermieden, dass Gasblasen zur Druckseite des Pumpenelements hin vordringen.

Die Steigleitung 26 als solche ist Teil einer innerhalb der Bremskreise ausgebildeten hydraulischen Kavität 28, welche dazu beiträgt Pulsationen auf der Saugseite des Pumpenelements zu vermeiden und das Betriebsgeräusch des Hydraulikaggregats zu senken. Das Volumen dieser hydraulischen Kavität 28 ist hierfür abgestimmt auf das maximale Druckmittelvolumen welches während der Kompressionsphase des Pumpenelements über das noch nicht geschlossene Einlassventil zurück zur Saugseite des Pumpenelements fließt und/oder auf das maximale Volumen an Gas, welches durch Erwärmung der Bremsflüssigkeit auf seine maximale Betriebstemperatur aus dem in den Bremskreisen enthaltenen Druckmittelvolumen potenziell ausgasen kann. Das darstellbare Volumen einer Steigleitung 26 alleine kann unter Umständen hierfür nicht ausreichen. Für solche Fälle können einzelne oder mehrere zusätzliche hydraulische Kavitäten 28 am Hydraulikblock 10 vorgesehen und mit der Steigleitung 26 verbunden werden. Verschiedene Varianten zusätzlicher Kavitäten 28 sind in den nachfolgend näher erläuterten Figuren dargestellt. Alle diese zusätzlichen Kavitäten 28 erstrecken sich von einer der Außenseiten des Hydraulikblocks 10 in das Innere dieses Hydraulikblocks 10 hinein und sind über die erwähnte Steigleitung 26 miteinander verbunden. Zudem sind die zusätzlichen Kavitäten 28 in einem Bereich des Hydraulikblocks 10 angeordnet, welcher sich zwischen den Ausnehmungen 12, 14 für die Pumpenelemente und den Leitungsanschlüssen 22, 24 des Hydraulikblocks 10 befindet.

Im Fall der Variante nach Figur 2 umfasst die Kavität 28 zusätzlich zur Steigleitung 26 eine zur linken Außenseite des Hydraulikblocks 10 hin ausmündenden Horizontalbohrung 30. Diese Horizontalbohrung 30 ist auf der Höhe des inneren Endes der Steigleitung 26 angeordnet und kreuzt die Steigleitung 26 t-förmig. Horizontalbohrung 30 und Steigleitung 26 weisen beispielhaft in etwa denselben Innendurchmesser auf, was jedoch nicht zwingend ist.

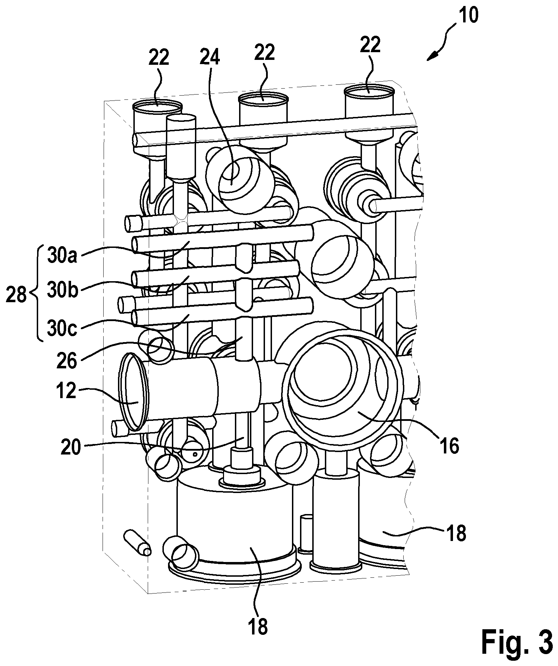

Bei der Variante nach Figur 3 setzt sich die gesamte Kavität 28 aus der Steigleitung 26 und mehreren koaxial zueinander verlaufende Horizontalbohrungen 30a, 30b, 30c zusammen, welche diese Steigleitung 26 auf unterschiedlichen Höhen kreuzen und sich beispielhaft zu beiden Seiten dieser Steigleitung 26 erstrecken. Exemplarisch gehen alle Horizontalbohrungen 30a, 30b, 30c von der linken Außenseite des Hydraulikblocks 10 aus. Die Öffnungen der Horizontalbohrungen 30a, 30b, 30c zur Außenseite sind beim fertig montierten Hydraulikaggregat von Verschlussmitteln verschlossen. Bekannte Verschlussmittel sind beispielsweise Kugeln, welche vorzugsweise im Bereich der Öffnungen in die Horizontalbohrungen 30a, 30b, 30c eingepresst werden und diese dadurch druckmitteldicht gegenüber der Umgebung verschließen. Alternativ zu Kugeln können zum Beispiel auch Stopfen, Verschlussschrauben oder scheibenförmig ausgeführte Deckel verwendet werden.

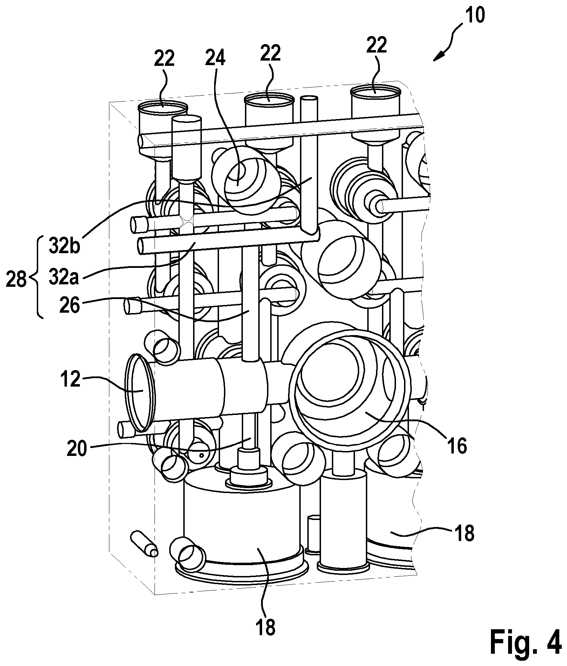

Figur 4 zeigt eine Kavität 28, die neben der Steigleitung 26 aus zwei, sich rechtwinklig kreuzenden Sacklochbohrungen 32a, 32b besteht. Eine erste dieser Sacklochbohrungen 32a verläuft wiederum auf der Höhe des inneren Endes der Steigleitung 26 horizontal und geht von der linken Außenseite des Hydraulikblocks 10 aus, während die zweite Sacklochbohrung 32b von der Oberseite des Hydraulikblocks 10 herkommend, vertikal und achsparallel versetzt zur Steigleitung 26 nach innen verläuft und am Ende der ersten Sacklochbohrung 32a in eben diese einmündet. Auch hier sind die jeweiligen Öffnungen der Sacklochbohrungen 32a, 32b beim montierten Hydraulikaggregat druckmitteldicht verschlossen, beispielsweise durch eingepresste und/oder verstemmte Stopfen, Deckel oder Kugeln.

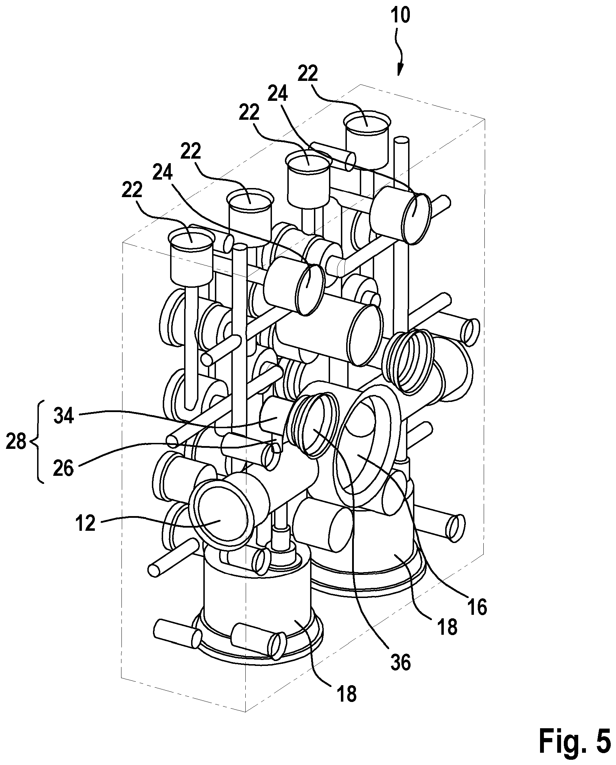

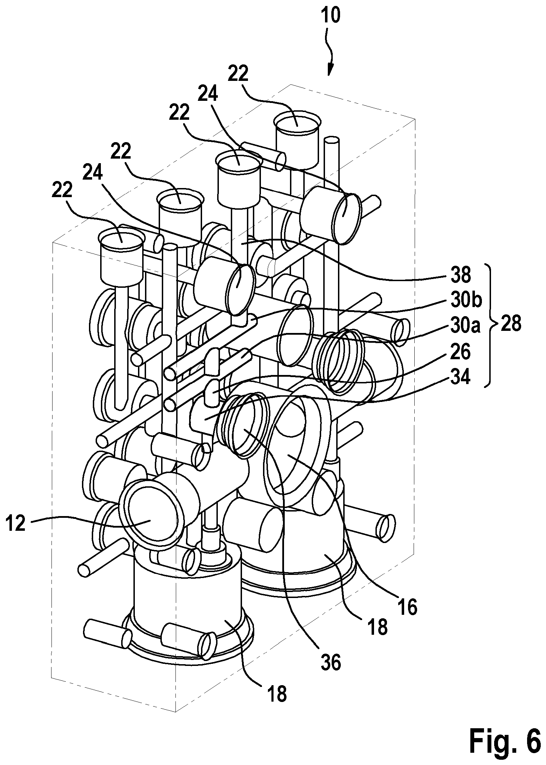

In Figur 5 ist die Steigleitung 26 mit einer Kammer 34 kontaktiert, deren Innendurchmesser deutlich größer als der Innendurchmesser der Steigleitung 26 ist und die eine relativ geringe Tiefe aufweist. Die Öffnung der Kammer 34 zur Umgebung ist von einem Verschlussdeckel 36 verschlossen, welcher umfangseitig mit dem Hydraulikblock 10 verstemmt oder anderweitig form- und/oder kraftschlüssig befestigt ist. Ebenso eine stoffschlüssige Verbindung wie beispielsweise eine Klebung oder eine Ringschweißverbindung sind vorstellbar um den Verschlussdeckel 36 am Hydraulikblock 10 druckmitteldicht zu befestigen. Selbstverständlich ist auch eine beliebige Kombination der erläuterten Kavitätsvarianten möglich. Eine solche Kombination zeigt beispielhaft Figur 6. Die Gesamtkavität ergibt sich bei diesem Ausführungsbeispiel aus der Steigleitung 26 und mehreren von der linken Außenseite des Hydraulikblocks ausgehenden, sacklochartig ausgeführten Horizontalbohrungen 30a, 30b, 30c, wenigstens einer Vertikalbohrung 38 zur Oberseite des Hydraulikblocks 10 und einer zur Vorderseite des Hydraulikblocks 10 ausmündenden Kammer 34.

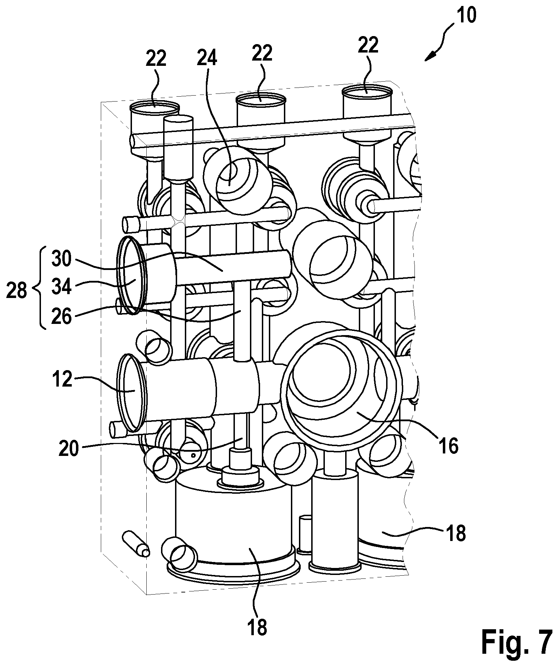

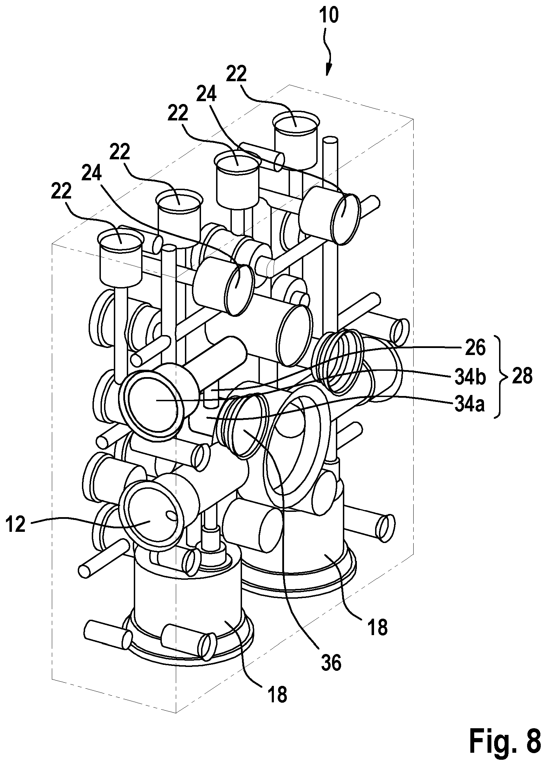

Beim Ausführungsbeispiel nach Figur 7 befindet sich die Öffnung der Kammer 34 beispielsweise an der linken Außenseite des Hydraulikblocks 10. Ein Horizontalbohrung 30 verbindet das Innere der Kammer 34 mit der Steigleitung 26. Eine in der Figur 8 dargestellte weitere Ausführungsvariante umfasst beispielhaft zwei Kammern 34a, 34b, deren Öffnungen an unterschiedlichen Außenseiten des Hydraulikblocks 10 ausmünden. Die Kammer 34a ist exemplarisch zur Vorderseite des Hydraulikblocks 10 hin ausgeführt, während die Öffnung der zweiten Kammer 34b sich zum Beispiel an der linken Außenseite des Hydraulikblocks 10 befindet. Die Steigleitung 26 quert die erste Kammer 34a und mündet in eine sacklochartig ausgeführte Horizontalbohrung 30 ein, welche in die zweite Kammer 34b mündet. Ausführungsvarianten mit mehr als zwei Kammern 34 sind vorstellbar.

Es ist selbstverständlich möglich die in den verschiedenen Ausführungsbeispielen offenbarten Kavitäten 28 in beliebiger Anzahl, Ausrichtung und Kombination ihrer Einzelkavitäten an den jeweiligen Einsatzfall eines Hydraulikaggregats anzupassen. Gemeinsam ist, dass die Kavitäten 28 jeweils eine Steigleitung 26 umfassen welche eine Verbindung zur Ausnehmung 12; 14 für das Pumpenelement herstellt und dass die Kavitäten 28, bezogen auf die Lage des Pumpenelements am Hydraulikblock 10, jeweils der die Leitungsanschlüsse 22; 24 aufweisenden Oberseite des Hydraulikblocks 10 zugewandt sind. Wie bereits dargelegt können vorhandene Gasblasen dadurch aufgrund der wirksamen Gravitationskraft über die Steigleitung 26 in Richtung zur Oberseite des Hydraulikaggregats aufsteigen und sich an einer von den Pumpenelementen abgewandten Ende der Kavität 28 ansammeln.

Es ist schließlich darauf hinzuweisen, dass die Ausführungsbeispiele jeweils die Ausbildung einer, eine Steigleitung 26 umfassenden hydraulischen Kavität 28 an einem der vorhandenen Bremskreise darstellen. Grundsätzlich ist es vorstellbar eine derartig ausgeführte hydraulische Kavität 28 lediglich an einem oder an jedem vorhandenen Bremskreis vorzusehen. Die Kavitäten 28 der einzelnen Bremskreise können dabei hinsichtlich ihres Gesamtvolumens, der Anordnung und/oder Ausgestaltung der miteinander verbundenen Einzelkavitäten gleichartig oder unterschiedlich ausgeführt sein.

Selbstverständlich sind weitere Änderungen oder Ergänzungen an den beschriebenen Ausführungsbeispielen denkbar, ohne von dem mit dem Anspruch 1 beanspruchten Grundgedanken der Erfindung abzuweichen.

## Patentansprüche

1. Hydraulikaggregat zur Regelung des Bremsdrucks in einer Radbremse einer elektronisch schlupfregelbaren Bremsanlage eines Kraftfahrzeugs, umfassend einen Hydraulikblock (10) mit einer zur Aufnahme eines Pumpenelements vorgesehenen Ausnehmung (12; 14),
einen Leitungsanschluss (22) am Hydraulikblock (10) zur Kontaktierung des Hydraulikaggregats mit der Radbremse;
einen in die Ausnehmung (12; 14) für das Pumpenelement einmündenden Kanal (20) zur Versorgung des in die Ausnehmung (12; 14) eingesetzten Pumpenelements mit Bremsflüssigkeit,
wobei der Kanal (20) eine Speicherkammer (18) für Bremsflüssigkeit am Hydraulikblock (10) mit einer Saugseite des in die Ausnehmung (12; 14) eingesetzten Pumpenelements verbindet, wobei der Leitungsanschluss (22) an oder im Bereich einer Oberseite des Hydraulikaggregats angeordnet ist,
**dadurch gekennzeichnet,**
**dass** eine im Inneren des Hydraulikblocks (10) ausgebildete und mit der Ausnehmung (12; 14) im Bereich der Saugseite des in die Ausnehmung (12; 14) eingesetzten Pumpenelements kontaktierte hydraulische Kavität (28) vorgesehen ist,
**dass** die hydraulische Kavität (28) eine Steigleitung (26) umfasst,
die eine im Inneren des Hydraulikblocks (10) endende Sacklochbohrung ausbildet und
**dass** die Steigleitung (26) von der Ausnehmung (12; 14) für das Pumpenelement in Richtung zum Leitungsanschluss (22) hin verläuft.

2. Hydraulikaggregat nach Anspruch 1,
**dadurch gekennzeichnet,**
**dass** die hydraulische Kavität (28) zu einer der Außenseiten des Hydraulikblocks (10) hin eine Öffnung aufweist, welche von einem am Hydraulikblock (10) verankerbaren Verschlusselement verschließbar ist.

3. Hydraulikaggregat nach Anspruch 1 oder 2,
**dadurch gekennzeichnet,**
**dass** die hydraulische Kavität (28) in einem Bereich des Hydraulikblocks (10) angeordnet ist, der sich zwischen der Ausnehmung (12; 14) für das Pumpenelement und dem Leitungsanschluss (22) des Hydraulikblocks (10) befindet.

4. Hydraulikaggregat nach Anspruch 1,
**dadurch gekennzeichnet,**
**dass** die Steigleitung (26) als geradlinige Verlängerung des die Speichereinrichtung (18) mit der Ausnehmung (12; 14) für das Pumpenelement kontaktierenden Kanals (20) ausgebildet ist.

5. Hydraulikaggregat nach Anspruch 4,
**dadurch gekennzeichnet,**
**dass** der die Speichereinrichtung (18) mit der Ausnehmung (12; 14) für das Pumpenelement verbindende Kanal (20) und die Steigleitung (26) auf einander gegenüberliegenden Seiten in die Ausnehmung (12; 14) für das Pumpenelement einmünden und koaxial zueinander verlaufen.

## Claims

1. Hydraulics assembly for controlling the brake pressure in a wheel brake of an electronically slip-controllable brake system of a motor vehicle, comprising a hydraulic block (10) with a recess (12; 14) for receiving a pump element,
a line port (22) on the hydraulic block (10) for establishing contact between the hydraulics assembly and a wheel brake,
a duct (20), opening into the recess (12; 14) for the pump element, for supplying the pump element inserted into the recess (12; 14) with brake fluid, wherein the duct (20) connects a storage chamber (18) for brake fluid on the hydraulic block (10) to an intake side of the pump element inserted into the recess (12; 14), wherein the line port (22) is arranged on or in the region of an upper side of the hydraulics assembly,
**characterized**
**in that** a hydraulic cavity (28), formed inside the hydraulic block (10) and in contact with the recess (12; 14) in the region of the intake side of the pump element inserted into the recess (12;14), is provided,
**in that** the hydraulic cavity (28) comprises a riser (26) which forms a blind bore ending inside the hydraulic block (10), and
**in that** the riser (26) runs from the recess (12; 14) for the pump element in the direction of the line port (22).

2. Hydraulics assembly according to Claim 1,
**characterized**
**in that** the hydraulic cavity (28) has an opening facing one of the outer sides of the hydraulic block (10) which can be sealed by a sealing element which can be anchored on the hydraulic block (10).

3. Hydraulics assembly according to Claim 1 or 2,
**characterized**
**in that** the hydraulic cavity (28) is arranged in a region of the hydraulic block (10) which is situated between the recess (12; 14) for the pump element and the line port (22) of the hydraulic block (10).

4. Hydraulics assembly according to Claim 1,
**characterized**
**in that** the riser (26) is designed as a straight extension of the duct (20) establishing contact between the storage device (18) and the recess (12; 14) for the pump element.

5. Hydraulics assembly according to Claim 4,
**characterized**
**in that** the duct (20), connecting the storage device (18) to the recess (12; 14) for the pump element, and the riser (26) open out on opposite sides into the recess (12; 14) for the pump element and run coaxially with respect to one another.

## Revendications

1. Groupe hydraulique destiné à réguler la pression de freinage dans un frein de roue d'une installation de freinage à patinage électroniquement réglable d'un véhicule automobile, comprenant
un bloc hydraulique (10) présentant un évidement (12 ; 14) destiné à recevoir un élément de pompe,
un raccord (22) pour conduites sur le bloc hydraulique (10), destiné à mettre en contact le groupe hydraulique et le frein de roue ;
un canal (25) débouchant dans l'évidement (12 ; 14) pour l'élément de pompe, destiné à alimenter l'élément de pompe inséré dans l'évidement (12 ; 14) en liquide de frein,
le canal (25) reliant une chambre d'accumulation (18) pour le liquide de frein au niveau du bloc hydraulique (10) à un côté aspiration de l'élément de pompe inséré dans l'évidement (12 ; 14),
le raccord (22) pour conduites étant agencé au niveau de ou dans la zone d'un côté supérieur du groupe hydraulique,
**caractérisé**
**en ce qu'**une cavité hydraulique (28), formée à l'intérieur du groupe hydraulique (10) et en contact avec l'évidement (12 ; 14) dans la zone du côté aspiration de l'élément de pompe inséré dans l'évidement (12 ; 14), est prévue en ce que la cavité hydraulique (28) comprend une conduite ascendante (26) qui forme un trou borgne se terminant à l'intérieur du groupe hydraulique (10) et
**en ce que** la conduite ascendante (26) s'étend à partir de l'évidement (12 ; 14) pour l'élément de pompe en direction du raccord (22) pour conduites.

2. Groupe hydraulique selon la revendication 1,
**caractérisé**
**en ce que** la cavité hydraulique (28) présente une ouverture vers l'un des côtés externes du bloc hydraulique (10), laquelle ouverture peut être fermée par un élément obturateur pouvant être ancré au niveau du bloc hydraulique (10).

3. Groupe hydraulique selon la revendication 1 ou 2,
**caractérisé,**
**en ce que** la cavité hydraulique (28) est agencée dans une zone du bloc hydraulique (10) qui se situe entre l'évidement (12 ; 14) pour l'élément de pompe et le raccord (22) pour conduites du bloc hydraulique (10).

4. Groupe hydraulique selon la revendication 1,
**caractérisé**
**en ce que** la conduite ascendante (26) est conçue comme un prolongement linéaire du canal (20) mettant en contact le dispositif d'accumulation (18) et l'évidement (12 ; 14) pour l'élément de pompe.

5. Groupe hydraulique selon la revendication 4,
**caractérisé**
**en ce que** le canal (20) reliant le dispositif d'accumulation (18) à l'évidement (12 ; 14) pour l'élément de pompe et la conduite ascendante (26) débouchent sur des côtés mutuellement opposés dans l'évidement (12 ; 14) pour l'élément de pompe et s'étendent coaxialement l'un par rapport à l'autre.
